# EUROPEAN PATENT APPLICATION

(11) **EP 4 718 611 A1**
(43) Date of publication of application: **01.04.2026**
(21) Application number: 24168874.6
(22) Date of filing: 07.04.2024
(51) Int. Cl.: H01M 50/308, H01M 50/342, H01M 50/358

(54) **AIRCRAFT WITH BATTERY VENTING MANIFOLD ASSEMBLY**

(71) Applicant: Lilium GmbH, 82131 Gauting (DE)
(72) Inventor: Eeckeleers, Laurent, 82131 Gauting (DE); Felsl, Dominik, 82131 Gauting (DE)
(74) Representative: Ter Meer Steinmeister & Partner

(57) **Abstract**

The invention relates to an aircraft (1) with an electric propulsion system (2), wherein the electric propulsion system (2) comprises engines (21) and battery assemblies (22) to provide the engines with electric energy, a number of skin panels (45) are attached to frames (43) and stringers (42) of a fuselage (4) and defining the outer shape of the fuselage (4) and of which skin panels (45) covering holding bays (44) for the battery assemblies (22) to the outside of the fuselage (4). To improve the security of the aircraft in regard to a runaway event of the electric propulsion system the skin panels (45) are providing venting ports (60) which are connected to one or more venting manifold (11). The invention further relates to a venting manifold assembly (10) for an aircraft (1) with an electric propulsion system (2) having both an inlet mounting adapter (13) and an outlet mounting adapter (15) to be connectable to a housing (24) of a battery assembly (22) inside the fuselage (4) and a skin panel (45) of the aircraft (1), thus, increasing the durability and/or applicability of the venting manifold assembly as well as reducing the production cost of the venting manifold assembly.

## Description

The invention relates to an aircraft according to the preamble of claim 1 and to a venting manifold assembly according to claim 7.

EP 3 998 202 A1 shows an aircraft with an electric propulsion system incorporating a battery assembly. The suggested design aims to address the issue of adjusting the aircraft's centre of gravity, which is crucial for stability, manoeuvrability, and operability. Unlike conventional aircraft, where fuel reallocation or the use of trim weights can adjust the centre of gravity, electrically powered aircraft present a challenge due to the fixed position of heavy battery assemblies. To solve this, a battery assembly comprised of individual battery modules that can be arranged within the fuselage's mounting assembly is proposed. This assembly has more mounting positions than there are battery modules, allowing for at least one mounting position to remain vacant. The configuration permits the adjustment of the aircraft's centre of gravity by rearranging the battery modules and the vacant mounting positions. This document does not mention mechanisms for the ejection or management of fumes or gases, particularly those that might be produced in a thermal runaway event or any other condition leading to the production of fumes within the battery assembly.

EP 3 998 208 A1 shows an innovative aircraft design focusing on integrating a battery system with enhanced safety, performance, and maintainability. The battery system includes at least one battery pack, with each pack comprising numerous battery cells directly or indirectly connected. Notably, these battery packs are arranged between the aircraft's inner structural wall and outer skin wall, accessible from outside for easy maintenance. This design enables a lightweight, high-performance battery system, crucial for electric propulsion of an electric vertical take-off and landing (EVTOL) aircraft. The application highlights a modular approach, where battery modules can be individually mounted and replaced, reducing vehicle downtime and improving system maintainability. Additionally, it addresses a thermal management system for the aircraft's battery system. The thermal management system circulates a heat transfer fluid through the individual battery modules to maintain optimal operating temperatures. Each battery module is equipped with fluid inlet and outlet connectors that link to an internal channel system within the module, allowing for efficient heat exchange. However, the problem of venting gases out of the battery assemblies or modules in the event of a failure such as a thermal runaway event is not addressed.

An object of the present invention is thus to improve the security of the aircraft in regard to a runaway event of the electric propulsion system and to increase the applicability of a venting manifold assembly.

This object is solved by the subject-matter defined in the independent claims 1 and 7. Advantageous embodiments are defined in the dependent claims. Note that the features mentioned in the above introductory part of this description may individually or in any combination thereof also be provided in the presently disclosed solution, if not mentioned or evident otherwise.

An aircraft according to the invention comprises an electric propulsion system, wings, a fuselage. The electric propulsion system comprises engines and battery assemblies to provide the engines with electric energy. The fuselage comprises an aerostructure to bear and distribute loads between the fuselage and the wings, wherein the aerostructure comprises a structure of stringers, skin and frames, wherein a number of frames are separated in longitudinal direction of the fuselage and arranged in parallel to each other, wherein holding bays are provided between adjacent frames to host battery assemblies, wherein the battery assemblies are hosting a number of battery cells which are enclosed in a housing with a venting manifold assembly, preferably a venting manifold assembly according to a second aspect of the invention as described below. Further, a number of skin panels are attached to the frames and stringers and defining the outer shape of the fuselage and of which skin panels covering the holding bays to the outside of the fuselage. According to the invention the skin panels are providing venting ports which are connected to one or more venting manifold assemblies.

The idea of the invention according to claim 1 offers improved safety by incorporating venting ports in the skin panels that are connected to one or more venting manifold assemblies, enabling proper ventilation of battery cells while maintaining structural integrity and aesthetics of the fuselage's outer shape. The venting ports incorporated into the skin panels allow for controlled release of gases generated by the battery cells in case of overheating. By connecting these ports to one or more venting manifold assemblies, prevention of potential safety hazards due to gas build-up within the housing of the battery assemblies is advantageously ensured while maintaining structural integrity and surface smoothness of the aircraft's skin.

The electric propulsion system powers the engines using battery-stored energy. By incorporating both engines and battery assemblies within the electric propulsion system, the aircraft can efficiently generate and distribute power for its various functions. The wings of the aircraft provide lift and maneuverability during flight and preferably incorporate the electric engines. They are designed to optimize aerodynamic performance while maintaining structural integrity under varying load conditions. By working in conjunction with the fuselage, the wings enable efficient air travel and contribute to overall aircraft stability. The fuselage serves as the primary structure of the aircraft, housing essential components such as cockpits for pilots, passenger cabins, cargo holds, and various control systems. The fuselage comprises the aerostructure that efficiently bears and distributes loads between itself and the wings. The aerostructure within the fuselage comprises stringers, skin, and frames to bear and distribute loads effectively. Stringers are longitudinal members that reinforce the structure by resisting bending stress, while frames are transverse structures within the aircraft's fuselage that serve to support the shape of the fuselage and absorb forces encountered during flight operations. The frames typically run perpendicular to the aircraft's longitudinal axis and are spaced along the length of the fuselage and within the wings. The skin panels are part of the skin and may thus have a curved surface, in particular with respect to their position in the longitudinal direction of the aircraft and/or in the vertical direction of the aircraft. The skin panels may cover the outer shape of the fuselage and may be attached to frames and stringers. The skin panels provide both structural integrity and a smooth aerodynamic surface. The holding bays are spaces provided between adjacent frames within the longitudinal direction of the fuselage. The holding bays serve as dedicated storage areas for the battery assemblies, allowing for better organization, management and replacement of the batteries onboard the aircraft. The fuselage cross section may feature a lower and upper cross section, both equal in length in the vertical direction, wherein the holding bays are located in the lower cross section. The battery assemblies host a number of battery cells that provide electric energy to power the electric engines within the electric propulsion system. By enclosing these cells in a housing connected to venting manifold assemblies, ventilation of gases and fumes in a runaway event is possible, while providing structural integrity to the battery assemblies. This approach contributes to improved safety and efficiency during flight operations. The housing of a battery assembly may provide one or more venting orifices for connection of the one or more venting manifold assemblies. A venting port may be arranged offset and/or at an angle to a corresponding venting orifice of the housing of a battery assembly. A corresponding venting orifice may be connected to the corresponding venting port via a venting manifold assembly. A number of the frames might have a closed cross section with frame sections of a circular, elliptical, rectangular, ovaloid and/or polygonal outer shape. The venting manifold assembly may be adjustable. The venting port may be an opening in the skin panel surrounded by a port section of the skin panel. The port section of the skin panel may be reinforced to hold the venting manifold assembly when fixed to the venting port and/or to the skin panel.

The three primary axes in an aircraft are the longitudinal axis, the horizontal axis, and the vertical axis. The longitudinal axis runs from nose to tail along the centerline of the aircraft, dividing it into fore and aft sections. The horizontal axis is perpendicular to the longitudinal axis and divides the aircraft into port and starboard sections. The vertical axis runs from top to bottom through the centerline of an aircraft, dividing it into upper and lower sections. The coordinate system of the aircraft may be in alignment with the coordinate system of the fuselage. Further, the longitudinal, horizontal and vertical axes of the aircraft may correspond to the roll, pitch and yaw axes of the coordinate system of the aircraft, respectively.

According to a further embodiment of the invention, the holding bays are covered to the outside by removable skin panels. This design allows for easy accessibility and maintenance of battery assemblies without compromising the overall structural integrity of the fuselage. In case of any issues or replacements needed in between flight operations, technicians can quickly remove these skin panels to gain access to the holding bays containing battery assemblies, ensuring efficient problem-solving and minimizing potential downtime for the aircraft.

According to a yet further embodiment of the invention, the venting ports are sealed by a breakable wall, in particular a breakable membrane, a breakable disc or a thinner section of the skin panel. This ensures that pressure release from battery cells is controlled and only occurs when necessary, while maintaining structural integrity under normal operating conditions. In case of overheating or other safety concerns, the breakable wall can be breached by the venting flows to allow for proper ventilation, preventing potential hazards associated with gas build-up within the fuselage. This approach further contributes to improved overall performance and safety during flight operations.

According to another embodiment of the invention, at least two neighbouring venting ports and/or at least two neighbouring venting manifold assemblies, in particular the two, in particular all, neighbouring venting manifolds and/or inlet adapters and/or outlet adapters, have the same geometry base and are adapted to match angular surface discrepancies between neighbouring skin panels to which the at least two adjacent venting ports and/or the at least two adjacent venting manifold assemblies are attached, respectively. This design ensures a seamless integration of venting ports and venting manifold assemblies, or of venting manifolds, respectively, with the overall fuselage structure while maintaining both structural integrity and aesthetics. By accommodating angular surface discrepancies between skin panels, this approach contributes to improved overall performance and safety during flight operations without compromising the aircraft's exterior appearance. Further, by accommodating the same geometry base, the same design is applied in multiple instances, allowing for a great reduction in cost, as in the optimal case, only a single design is necessary for the entire aircraft.

According to yet another embodiment of the invention, the installation of one or more battery assemblies within the battery bays are inclined at different angles with respect to the longitudinal axis of the fuselage. This design allows for optimized weight distribution and centre of gravity along the aircraft's length, improving overall performance during flight operations. By adjusting the angle of battery installations, this approach also enables more efficient use of available space, potentially allowing for a more aerodynamic shape of the fuselage. Further, the venting manifold assembly connected to the housing may be adapted to an angle of a surface of the housing with respect to the longitudinal axis, in particular an inlet adapter and/or a venting manifold of the venting manifold assembly may be adapted to an angle of a surface of the housing with respect to the longitudinal axis.

Moreover, in another embodiment of the invention, an outlet section of the venting manifold assembly may be adapted to match flush with the skin panel surface and/or the venting port. This design ensures a streamlined appearance for the aircraft's exterior while maintaining proper functionality of the venting system. By blending seamlessly into the fuselage structure, this approach contributes to improved overall aerodynamics during flight operations without compromising safety or structural integrity concerns related to gas release from battery cells.

Another aspect of the invention relates to a venting manifold assembly for an aircraft, in particular an aircraft as depicted above. The venting manifold assembly comprises a venting manifold adapted to be connectable to a housing of a battery assembly and to transfer a high pressure, high temperature multiphase flow from an inside of the housing to an outside of the aircraft in a controlled manner, wherein the venting manifold comprises an inlet mounting adapter arranged at an inlet section of the venting manifold and being connectable to the housing of the battery assembly, and wherein the venting manifold further comprises an outlet mounting adapter arranged at an outlet section of the venting manifold and being connectable to a venting port of the aircraft.

The venting manifold assembly according to claim 7 offers an improved applicability. The inlet and outlet mounting adapters ensure that the venting manifold can be easily connected to both battery housings and venting ports, regardless of their specific geometry or orientation. This enhances overall compatibility with various aircraft shapes and battery configurations. Further, by transferring high pressure, high temperature multiphase flow in a controlled manner, the risk of gas build-up within the fuselage and potential hazards associated with overheating or other safety concerns during flight operations are reduced. Finally, the mounting adapters enable seamless integration of the venting manifold assembly into the aircraft's overall structure, maintaining both structural integrity and aerodynamics while ensuring proper functionality of the venting system. The high pressure, high temperature multiphase flow may be a flow resulting from a thermal runaway event of a battery cell. The pressure and the temperature of such events depend on the type of battery cell as well as the spatial volume given to the expanding gases by the design of the housing of the battery assembly.

Further, the inlet mounting adapter may be connected to the housing of the battery assembly by fasteners and/or a floating fastening plate. By using standardized fastening mechanisms, this approach also enables quick replacement or upgrading of inlet mounting adapters without requiring extensive modifications to the existing venting manifold assembly.

According to another embodiment of the invention, the inlet mounting adapter is a separate component adaptable to be connected to the venting manifold. This design allows for easy assembly and maintenance of the venting manifold system, as well as compatibility with various battery housing configurations.

According to yet another embodiment of the invention, an intermediate connection between the inlet mounting adapter and the venting manifold is adjustable, in particular adjustable in a direction of extension of the venting manifold. This design allows for flexibility in accommodating various battery housing geometries or orientations without compromising the functionality of the venting system. By enabling adjustments along the extension axis of the venting manifold, this ensures proper alignment and sealing between the inlet mounting adapter and the venting manifold assembly under different installation conditions, further improving overall performance and safety during flight operations, while reducing cost for expansive individual designs of the venting manifold adapted to accommodate for the differing geometric dimensions at the different locations of installation. The intermediate connection may be a plug connection. A plug connection allows for an easy assembly of the venting manifold. In particular, the inlet mounting adapter may be plugged into the venting manifold and/or plugged onto the venting manifold.

Further according to an embodiment of the invention, an inlet connection between the inlet mounting adapter and the housing of the battery assembly is adjustable, in particular adjustable perpendicular to a direction of connection of the venting manifold to the housing. This allows for flexibility in accommodating various battery housing geometries or orientations without compromising the functionality of the venting system. By enabling adjustments perpendicular to the venting manifold's attachment point, this approach ensures proper alignment and sealing between the inlet mounting adapter and the battery assembly under different installation conditions, further improving overall performance and safety during flight operations. This feature also simplifies the manufacturing process by allowing for a single design that can be adapted to various housing configurations without significant modifications or additional components.

Moreover, in accordance to another embodiment of the invention, the outlet mounting adapter is flush connectable to the venting port and fixable by fasteners. This design approach ensures secure attachment to the venting port with a greatly reduced risk of a by-pass or break out of the hot gases in between the connection between the outlet mounting adapter and the venting port. By using standardized fastening mechanisms, this feature enables quick replacement or upgrading of outlet mounting adapters without requiring extensive modifications to the existing venting manifold assembly.

Further according to yet another embodiment of the invention, an outlet connection of the outlet mounting adapter to the venting port is adjustable, in particular adjustable perpendicular to a direction of connection of the outlet mounting adapter to the venting port. By enabling adjustments perpendicular to the attachment point between the outlet adapter and skin panel, this approach ensures proper alignment and sealing under different installation conditions, further improving overall performance and safety during flight operations. This feature also simplifies the manufacturing process by allowing for a single design that can be adapted to various housing configurations without significant modifications or additional components. Additionally, it facilitates easy maintenance and inspection processes by providing adjustability at the connection point between the outlet adapter and skin panel.

Further according to yet another embodiment of the invention, the venting manifold has a curvature or a bend transverse to the longitudinal extension of the venting manifold, in particular such that an offset and/or an angle between an outer surface of the housing and an inner surface of the venting port can be compensated by the venting manifold. This allows for greater adaptability in accommodating various battery housing geometries or orientations and venting port geometries or orientations without compromising the functionality of the venting system. By incorporating curvature or bends into the venting manifold, this approach ensures proper alignment and sealing between the inlet mounting adapter, outlet mounting adapter, and skin panel under different installation conditions, further improving overall performance and safety during flight operations.

Further according to yet another embodiment of the invention, an outlet of the venting manifold is closed with a breakable membrane or breakable disc, in particular wherein the breakable wall is connected to an end face of the venting manifold. This design feature provides additional safety measures by allowing for controlled release of gases through the breakable membrane or disc under high pressure conditions. By incorporating a breakable component, this approach ensures that the venting system remains functional while preventing uncontrolled gas releases that could compromise flight operations or pose risks to personnel and equipment. This feature also simplifies maintenance processes by allowing for easy replacement of the breakable membrane or disc, when necessary, without requiring extensive modifications to the existing venting manifold assembly. Alternatively or additionally, the breakable wall might be connected to the venting port of the skin panel. The breakable wall might be encompassed by a fastening ring, either as an integral or separate part of the breakable wall. The fastening ring may be fastened to the end face of the venting manifold. Alternatively, the breakable wall might be a thinned part of the skin panel.

Further according to another embodiment of the invention, the inlet mounting adapter has a minimum inner cross section such that a flow in a runaway event does not choke, with the Mach-number being preferably not higher than 0.9, more preferably not higher than 0.95. This design feature ensures efficient gas flow and minimizes resistance during high pressure events. By maintaining an appropriate inner cross section, this approach reduces the risk of system failure and maintains optimal performance during critical operations. Additionally, by ensuring a minimum inner cross section for the inlet mounting adapter, the overall efficiency and reliability of the venting manifold assembly are further enhanced. In addition, or alternatively, according to another embodiment of the invention, the venting manifold has a minimum inner cross section such that a flow in a runaway event does not choke, with the Mach-number being preferably not higher than 0.9, more preferably not higher than 0.95. This design feature ensures efficient gas flow and minimizes resistance during high pressure events within the venting manifold itself. By maintaining an appropriate inner cross section throughout the entire assembly, this approach reduces the risk of system failure and maintains optimal performance during critical operations. Additionally, by ensuring a minimum inner cross section for both the inlet mounting adapter and the venting manifold, the overall efficiency and reliability of the venting manifold assembly are further enhanced. Further, in addition or alternatively according to another embodiment of the invention, an inner cross section of the venting manifold at its outer front face is larger than the minimum inner cross section of the inlet mounting adapter. Specifically, the inner cross section of the venting manifold at its outer front face has a diameter in the range of 90mm to 130mm and is larger than the minimum inner cross section of the inlet mounting adapter having a diameter in the range of 60mm to 100mm. This design feature ensures that there is no bottleneck effect at the junction between the venting manifold and the inlet mounting adapter, allowing for smooth gas flow during normal operation as well as in runaway events. By providing a larger cross-sectional area at the outer front face of the venting manifold, this approach enhances the overall efficiency and reliability of the venting manifold assembly while maintaining its functionality and safety. Moreover, an inner cross section of the venting manifold may be designed as a diffusor or as an expansion nozzle, wherein the minimum inner cross section of the inlet mounting adapter serves as a nozzle followed by an expanded and/or an expanding inner cross section of the venting manifold. By expanding the flow towards the outlet of the venting manifold a flow with a low Mach-number is readily achievable and thus, efficiency and reliability of the venting manifold assembly while maintaining its functionality and safety.

In the following, embodiments of the invention will be described with reference to the attached schematic figures. Features which correspond to one another with regard to their type and/or function may be assigned the same reference signs throughout the figures.
- Fig. 1: shows a schematic illustration of an aircraft according to an embodiment of the invention including an electric propulsion system.
- Fig. 2: shows a perspective illustration of a fuselage of the aircraft according to the embodiment of the invention.
- Fig. 3: shows a schematic front view of a section of the aircraft according to the embodiment of the invention.
- Fig. 4: shows a schematic detail of a connection of a venting manifold assembly according to an embodiment of the invention to a venting port.
- Fig. 5: shows an exploded side view of a venting manifold assembly according to another embodiment of the invention.

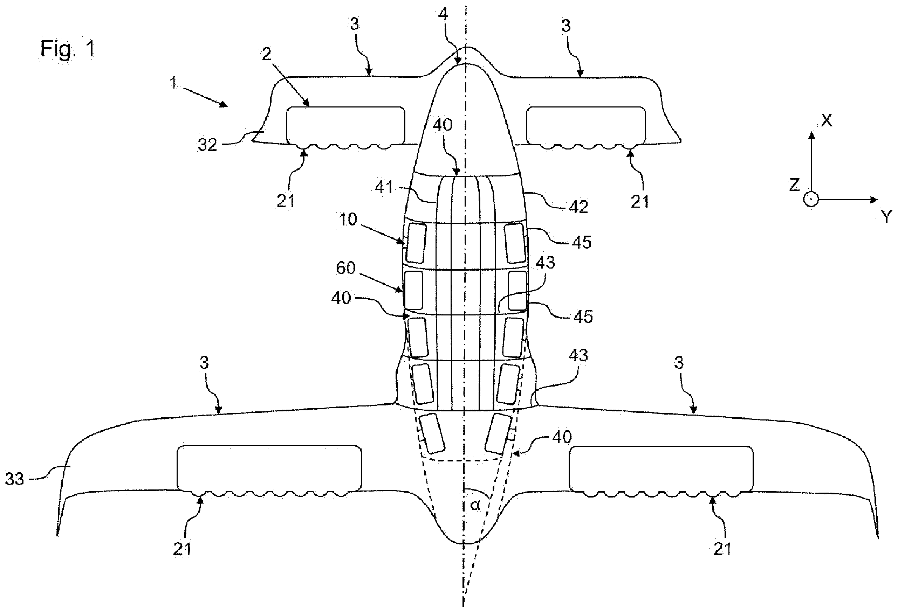

In Fig. 1 an aircraft 1 with an electric propulsion system 2, wings 3 and a fuselage 4 is displayed in a schematic top view, in particular to display the longitudinal and horizontal positions of the components of the electric propulsion system 2 inside the fuselage 4. The fuselage 4 comprises an aerostructure 40 designed to bear and distribute loads between the fuselage 4 and wings 3. The aerostructure 40 comprises a structure of stringers 41, skin panels 45, and frames 43. The stringers 41 stretch in a longitudinal direction X of the fuselage 4 and provide longitudinal stability to the aircraft 1. A number of the frames 43 are arranged in parallel but distanced to each other along the longitudinal direction X of the fuselage 4. The wings 3 of this embodiment feature two main wings 31 at an elevated aft section of the aircraft 1, providing lift and stability during flight. Additionally, the aircraft 1 features two canard wings 32 at the front tip, which improve balance, control and maneuverability during takeoff and landing. The electric propulsion system 2 comprises a number of engines 21 on each of the wings 3. To enable vertical take-off and landing, the engines 2 are pivotable in a transversal axis Y. The electric propulsion system 2 is powered by battery assemblies 22.

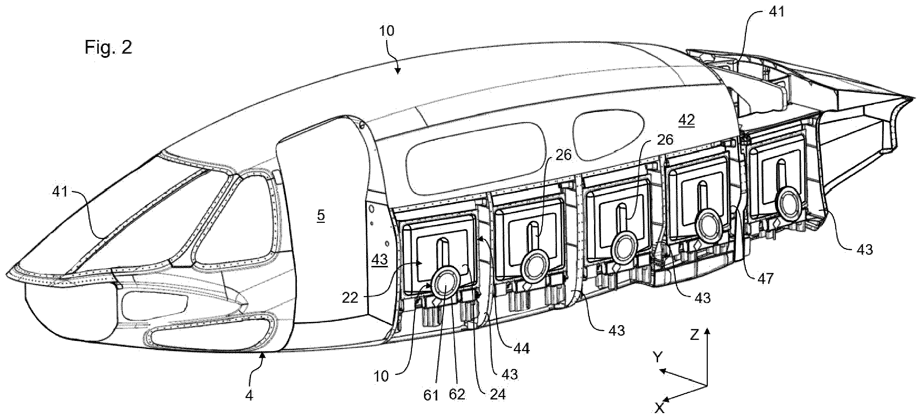

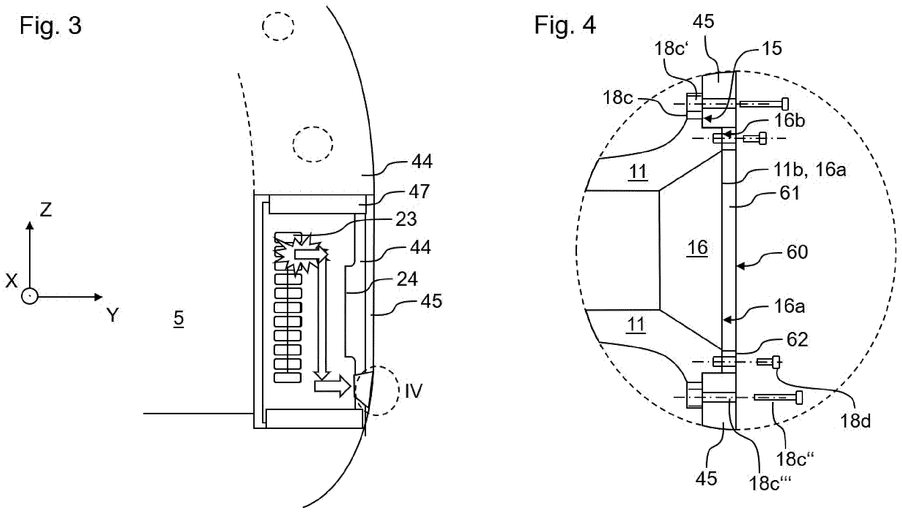

In this particular embodiment, within an outer part of the aerostructure 40 of the fuselage 4 five battery assemblies 22 are arranged on each side of the fuselage 4. In the displayed embodiment, each of the five battery assemblies 22 is connected to a respective venting manifold assembly 10 for venting fumes, gases and particles out of the respective battery assembly 22 and away from an inside of the aircraft 1, in particular a cabin 5 as depicted in Fig. 2 and 3. The battery assemblies 22 may also be connected to more than one venting manifold assembly 10. To adapt the battery capacity of the electric propulsion system 2 there might be more or less than five battery assemblies 22 allocated to the aircraft 1.

As shown, the battery assemblies 22 are arranged in a row of five essentially identical battery assemblies 22 on each side of the fuselage 4, with each battery assembly 22 having a slightly different angle α compared to its neighbors and towards the longitudinal axis X of the fuselage. This arrangement helps distribute weight more evenly along the length of the aircraft, improving overall balance and performance. Longitudinal distances between neighboring battery assemblies 22 and distances between the battery assemblies 22 and the skin panels 45 may vary. The battery assemblies 22 might differ from one another in at least one aspect.

A number of holding bays 44 are provided between adjacent frames 43, each hosting one of the battery assemblies 22 of the electric propulsion system 2. The number of holding bays 44 may correspond to the number of battery assemblies 22, but also may be larger to allow for a more flexible load distribution adapted to the current mission of the aircraft 1. As shown in Fig. 3, a battery assembly 22 contains a number of battery cells 23, enclosed within a housing 24 connected to a venting manifold assembly 10.

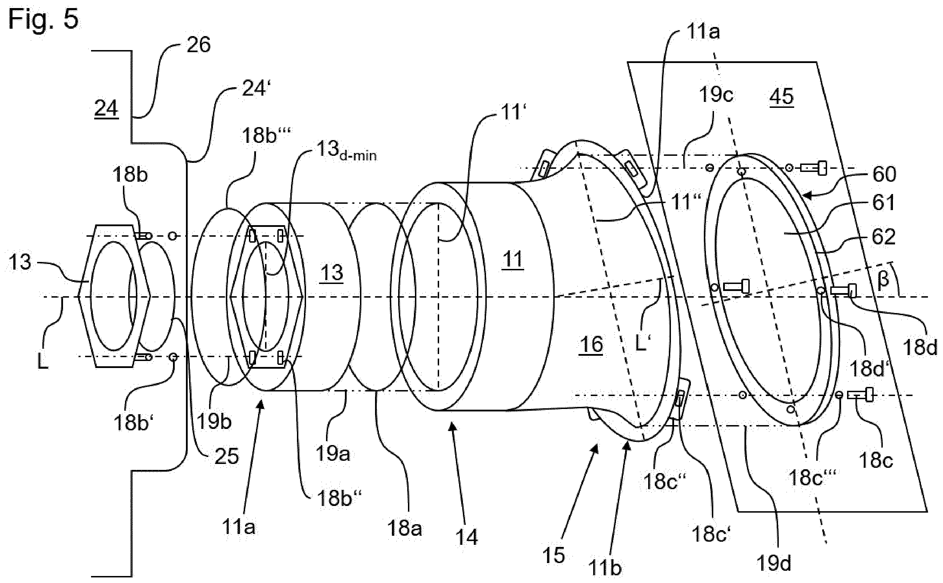

The skin panels 45 cover the holding bays 44 on the outside of the fuselage 4 while also providing the venting ports 60. The venting ports 60 may be connected to one or more venting manifold assemblies 10, ensuring proper ventilation out of the holding bays 44 in case of a runaway event and thus, preventing critical pressure buildup during operation. To create a seamless surface, the skin panels 45 are adapted to the curvature of the skin surface of the aircraft 1. The adaption of the skin panels 45 to the curvature of the aircraft 1, the angular arrangement of the battery assemblies 22 and the possible differences in surface designs of the housings 24 of the battery assemblies 22 may lead to angular surface discrepancies between neighboring skin panels 45 as well as between the skin panels and the battery housings 24. To match angular surface discrepancies, the venting manifold assemblies 10 are designed to be adjustable by comprising adjustable connections, in particular an intermediate connection 19a, an inlet connection 19b and an outlet connection 19c, as shown in Fig. 5.

In Fig. 2, an example of the fuselage 4 and battery assemblies 22 arranged on one side of the fuselage 4 are depicted in a perspective view. The fuselage's aerostructure 40 comprises stringers 41, skin panels 45, and frames 43, wherein for illustration purposes, the skin panels 45 are not displayed in Fig. 2. Holding bays 44 are provided between adjacent frames 43 to host the battery assemblies 22. To facilitate easy access, removability and maintainability of the battery assemblies 22, the holding bays 44 include battery racks 47 to connect and secure the battery assemblies 22 inside the holding bays 44. The battery assemblies 22 each comprise a housing 24 for protection and structural support and in case of a runaway event, for directing hot gases away from the cabin 5. For this purpose, the housing 24 of battery assemblies 22 may be reinforced and/or strengthened by reinforcements 26.

As shown, each of the housings 24 is connected to a single venting manifold assembly 10, wherein the front faces of these venting manifold assemblies 10 can be seen. In particular end faces 16b of venting manifolds 11 and breakable walls 61 with surrounding fastening rings 62 fastened to the respective venting manifold assembly 10 are shown. In case of a runaway event, the breakable walls 61 will burst and allow an undisturbed flow of gases in a controlled manner out of the aircraft, preventing further damage to the aircraft 1.

In Fig. 3 a sectional front view is depicted of the fuselage 4 of the aircraft 1 including a battery assembly 22 adjacent to a cabin 5 of the aircraft 1. The battery assembly 22 includes a number of battery cells 23 that are stacked and contained inside of the housing 24. The housing 24 of the battery assembly 22 is connected to a venting manifold assembly 10 in a lower section of the fuselage 4, in particular in a lower third of the fuselage 4, and at a bottom section of the housing 24. A desired flow path for fumes and gases during a thermal runaway event is illustrated by arrows, showing how these substances would be directed outward by the housing 24. To ensure that the gases do not leak into the cabin 5 the housing 24 may be reinforced. Advantageously, this placement of the venting manifold assembly 10 allows for the gases to be exhausted away from the wings 3 and the engines 21 that are arranged in an elevated position in the aft section of the aircraft 1.

The skin panels 45, which cover the holding bays 44 on the outside of the fuselage 4, also include the venting ports 60. The venting ports 60 may be designed as through holes surrounded by port frames in the skin panels 45.

In the following description, an exemplary embodiment of the venting manifold assembly 10 is described by means of the detailed sectional view in Fig. 4 as well as the exploded side view shown in Fig. 5. The position of the detailed sectional view of Fig. 4 is marked in Fig. 3 with a dotted circle and the roman numeral IV.

The venting manifold assembly 10 comprises a venting manifold 11 acting as an exhaust conduit to direct the gases out of the housing 24. As depicted in Fig. 4 and Fig. 5, the venting manifold incorporates an inner dent and an outer curved surface to accommodate for an offset and/or an angle β between a venting orifice 25 of the housing 24 and the venting port 60. The inner dent leads to a change in direction of the longitudinal extension L to L' of the venting manifold 11. These dents and curves might differ from venting manifold 11 to venting manifold 11 in the number of venting manifold assemblies 10 used in a single aircraft 1 but placed at different positions within the aircraft 1. However, it is desired to have the same design of the venting manifold 11 at least at multiple locations, better yet at all locations the venting manifold 11 is installed to reduce production and design costs. The remaining elements besides the venting manifold 11 of the venting manifold assemblies 10 may be identical for all venting manifold assemblies 10. Further, the venting manifold 11 might be curved at an inside, instead of or in addition to the dent. Moreover, the venting manifold 11 might be dented at an outside, instead of or in addition to the curved surface.

An inner cross section 11' of the venting manifold 11, especially an inner cross section 11" of the venting manifold 11 at its outer front face 11b, may be larger than a minimum inner cross section 13_{d-min} of the inlet mounting adapter 13. In this particular embodiment, the inner cross section 11" of the venting manifold 11 at its outer front face 11b has a diameter in the range of 90mm to 130mm and is larger than the minimum inner cross section of the inlet mounting adapter having a diameter in the range of 60mm to 100mm.

Further, as shown in Fig. 5, the venting manifold assembly 10 comprises an inlet mounting adapter 13 arranged at an inlet section 14 of the venting manifold 11 and connectable to the housing 24 of the battery assembly 22. The venting manifold 11 and the inlet mounting adapter 13 form an intermediate connection 19a. The intermediate connection 19a may be a plug connection. The inlet mounting adapter 13 in this embodiment is slidably held within the inlet section 14 of the venting manifold 11 to allow for an adaptation in length of the venting manifold assembly 10. To ensure a tight seal, an O-ring 18a is placed between an outer circumference of the inlet mounting adapter 13 and an inner surface of the inlet section 14 of the venting manifold 10. Thus, the intermediate connection 19a between the inlet mounting adapter 13 and the venting manifold 11 is adjustable in a direction of extension L of the venting manifold 11.

To secure the venting manifold assembly 10 to the housing, a floating fastening plate 17 is arranged inside the housing 24. The fastening plate 17 comprises fasteners 18b that are stuck through bore holes 18b' in the housing 24. The bore holes 18b' are arranged around a venting orifice 25 in the housing 24. The inlet mounting adapter 13 also comprises slots 18b" for receiving the fasteners 18b. By utilizing slots 18b" having a greater length than width, the relative positioning of the inlet mounting adapter 13 to the housing 24 is adjustable perpendicular to the longitudinal direction L of the venting manifold 11. Inside the inlet mounting adapter 13 the fasteners 18b of the fastening plate 17 are fastened by nuts (not shown). Thus, an adjustable inlet connection 19b is created. To create a tight seal, another O-ring 18b‴ is located between a front face 13a of the inlet mounting adapter 13 and the housing 24.

The venting manifold 11 also includes an outlet mounting adapter 15, which is integrally connected to an outlet section 16 of the venting manifold 11 and can be attached to a venting port 60 of the aircraft. The outlet mounting adapter 15 serves as a connector to the venting port 60 in the skin panel 45 and as a holder of the breakable wall 61 closing off an outlet 16a of the outlet section 16.

To secure the venting manifold assembly 10 to the venting port 60, the outlet mounting adapter 15 is designed as a flange with protruding frames 18c" accommodating slots 18c'. As alternatives to a flange, the outlet mounting adapter 15 may have other shapes. Further alternatively, the slots 18c' may be arranged inside a main body of the outlet mounting adapter 15. The skin plate 45 is fastened to the outlet mounting adapter 15 by fasteners 18c that are stuck through bore holes 18c'" in the skin plate 45 and through the slots 18c' with a greater length than width of the outlet mounting adapter 15. The fasteners 18c may be secured by nuts and plates (not shown) on the outside of the outlet mounting adapter 15. The bore holes 18c‴ in the skin panel 45 may be arranged around the venting port 60. The slots 18" are arranged at an angle around the longitudinal direction L' of the venting manifold 11, allowing for a slight rotation of the venting manifold 11 with respect to the skin panel 45 before fastening of the fasteners 18c. Thus, an adjustable outlet connection 19c is created.

In the exemplary embodiment shown in Fig. 4 and 5, a breakable wall 61 held and surrounded by a fastening ring 62 is displayed. Alternatively, the breakable walls 61 may be part of a surface of the skin panels 45. Furter alternatively, the breakable wall 61 may comprise the fastening ring 62, in particular the fastening ring 62 may be integrally designed with the breakable wall 61. The breakable wall 61 is attached to the outer front face of the venting manifold assembly 10 by means of fasteners 18d stuck through holes 18d' in the fastening ring 62. To secure the fasteners 18d in the outlet mounting adapter 15, the fasteners 18d are designed as bolts with threads and the outlet mounting adapter 15 comprises threaded holes 18d" to form a threaded closing connection 19d between the outlet mounting adapter 15 and the breakable wall 61. By fastening the breakable wall 61 directly to the venting manifold 11, installation and maintenance are significantly easier to conduct.

### References

- 1: aircraft
- 2: electric propulsion system
- 3: wings
- 4: fuselage

- 10: venting manifold assembly
- 11: venting manifold
- 11_{d-min}: minimum inner cross section
- 11': inner cross section
- 11a: inner front face
- 11b: outer front face
- 13: inlet mounting adapter
- 13_{d-min}: minimum inner cross section
- 13a: front face
- 14: inlet section
- 15: outlet mounting adapter
- 16: outlet section
- 16a: outlet
- 16b: end face
- 17: fastening plate
- 18: fasteners
- 18a: O-ring
- 18b: fastener
- 18b': hole
- 18b": slot
- 18b‴: O-ring
- 18c: fastener
- 18c': slot
- 18c": frame
- 18c‴: hole
- 18d: fastener
- 18d': hole
- 19a: intermediate connection between the inlet mounting adapter and the venting manifold
- 19b: inlet connection between the inlet mounting adapter and the housing
- 19c: outlet connection of the outlet mounting adapter to the venting port
- 19d: closing connection of the breakable wall to the outlet mounting adapter

- 21: engine
- 22: battery assembly
- 23: battery cells
- 24: housing
- 24': (outer) surface of the housing
- 25: venting orifice
- 26: reinforcement

- 31: main wings
- 32: canard wings
- 40: aerostructure
- 41: stringer
- 42: skin
- 43: frame
- 44: holding bay
- 45: skin panel
- 47: battery racks
- 60: venting port
- 61: breakable wall
- 62: fastening ring
- X: longitudinal direction
- Y: horizontal direction
- Z: vertical direction
- L: longitudinal direction of the venting manifold (adjacent to the battery housing)
- L': longitudinal direction of the venting manifold (adjacent to the skin panel)
- α: angle of the battery housing to the longitudinal direction X
- β: angle of an outer surface of the housing and a surface of the venting port

## Claims

1. Aircraft (1) with
an electric propulsion system (2),
wings (3), and
a fuselage (4),
wherein the electric propulsion system (2) comprises engines (21) and battery assemblies (22) to provide the engines with electric energy
wherein the fuselage (4) comprises an aerostructure (40) to bear and distribute loads between the fuselage (4) and the wings (3), wherein
• the aerostructure (40) comprises a structure of stringers (41), skin (42) and frames (43),
• a number of frames (43) are separated in longitudinal direction (X) of the fuselage (4) and arranged in parallel to each other,
• holding bays (44) are provided between adjacent frames (43) to host battery assemblies (22),
• the battery assemblies (22) are hosting a number of battery cells (23) which are enclosed in a housing (24) with a venting manifold assembly (10), preferably a venting manifold assembly according to claims 13 to 22,
• a number of skin panels (45) are attached to the frames (43) and stringers (42) and defining the outer shape of the fuselage (4) and of which skin panels (45) covering the holding bays (44) to the outside of the fuselage (4),
**characterized in**
**that** the skin panels (45) are providing venting ports (60) which are connected to one or more venting manifold assemblies (10).

2. Aircraft according to claim 1, **characterized in**
**that** the holding bays (44) are covered to the outside by removeable skin panels (45).

3. Aircraft according to any of the proceeding claims, **characterized in**
**that** the venting ports (60) are sealed by a breakable wall, in particular breakable membrane, breakable disc or a thinner section of the skin panel (45).

4. Aircraft according to any of the proceeding claims, **characterized in**
**that** at least two neighbouring, in particular all, venting ports (60) and/or at least two neighbouring, in particular all, venting manifold assemblies (10), in particular the two neighbouring, in particular all, venting manifolds (11), have the same geometry base and are adapted to match angular surface discrepancies between neighbouring skin panels (45) to which the at least two adjacent venting ports (60) and/or the at least two adjacent venting manifold assemblies (11) are attached, respectively.

5. Aircraft according to any of the proceeding claims, **characterized in**
**that** the installation of one or more battery assemblies (22) within the holding bays (44) are inclined at different angles (α) with respect to the longitudinal axis (X) of the fuselage (4).

6. Aircraft according to any of the proceeding claims, **characterized in**
**that** an outlet section (16) of the venting manifold assembly (10) is adapted to match flush with the skin panel (45) surface and/or the venting port (60).

7. Venting manifold assembly (10) for an aircraft (1) with an electric propulsion system (2) including a battery assembly (22) having a housing (24), in particular for an aircraft (1) according to any one of the proceeding claims, comprising
a venting manifold (11) adapted to be connectable to the housing (24) of the battery assembly (22) and to transfer a high pressure, high temperature multiphase flow from an inside of the housing (24) to an outside of the aircraft (1) in a controlled manner,
wherein the venting manifold (11) comprises an inlet mounting adapter (13) arranged at an inlet section (14) of the venting manifold (11) and being connectable to the housing (24) of the battery assembly (22),
wherein the venting manifold (11) comprises an outlet mounting adapter (15) arranged at an outlet section (16) of the venting manifold (11) and being connectable to a venting port (60) of the aircraft (1).

8. Venting manifold assembly according to claim 7, **characterized in**
**that** the inlet mounting adapter (13) is a separate component adaptable to be connected to the venting manifold (11).

9. Venting manifold assembly according to claim 8, **characterized in**
**that** an intermediate connection (19a) between the inlet mounting adapter (13) and the venting manifold (11) is adjustable, in particular adjustable in a direction of extension (L, L') of the venting manifold (11).

10. Venting manifold assembly according to one of claims 7 to 9, **characterized in**
**that** an inlet connection (19b) between the inlet mounting adapter (13) and the housing (24) of the battery assembly (22) is adjustable, in particular adjustable perpendicular to a direction of connection of the venting manifold (11) to the housing (24).

11. Venting manifold assembly according to one of claims 7 to 10, **characterized in**
**that** the outlet mounting adapter (15) is flush connectable to the venting port (60) and fixable by fasteners (18).

12. Venting manifold assembly according claim 11, **characterized in**
**that** an outlet connection (19c) of the outlet mounting adapter (15) to the venting port (60) is adjustable, in particular adjustable perpendicular to a direction of connection of the outlet mounting adapter (15) to the skin panel (45).

13. Venting manifold assembly according to one of claims 7 to 12, **characterized in**
**that** the venting manifold (11) has a curvature or a bend transverse to the longitudinal extension (L, L') of the venting manifold (11).

14. Venting manifold assembly according to one of claims 7 to 13, **characterized in**
**that** an outlet (16a) of the venting manifold (11) is closed with a breakable wall (46), in particular a breakable membrane or a breakable disc, in particular wherein the breakable wall is connected to an end face (16b) of the venting manifold (11).

15. Venting manifold assembly according to one of claims 7 to 14, **characterized in**
**that** the inlet mounting adapter (13) has a minimum inner cross section (13_{d-min}) such that a flow in a runaway event does not choke, in particular reach a Mach-number not higher than 0.9, preferably not higher than 0.95, and/or
**that** the venting manifold (11) has a minimum inner cross section (11_{d-min}) such that a flow in a runaway event does not choke, in particular reach a Mach-number not higher than 0.9, preferably not higher than 0.95, and/or
**that** an inner cross section (11") of the venting manifold (11) at its outer front face (11b) is larger than a minimum inner cross section (13_{d-min}) of the inlet mounting adapter (13), in particular that the inner cross section (11") of the venting manifold (11) at its outer front face (11b) has a diameter in the range of 90mm to 130mm and is larger than the minimum inner cross section of the inlet mounting adapter having a diameter in the range of 60mm to 100mm.
